# FASCICULE DE BREVET EUROPEEN

(11) **EP 1 197 365 B1**
(45) Date de publication et mention de la délivrance du brevet: **29.10.2003**
(21) Numéro de dépôt: 01402503.5
(22) Date de dépôt: 28.09.2001
(51) Int. Cl.: B60H 1/00, B60H 1/34

(54) **Dispositif de distribution et d'orientation d'air, notamment pour automobile**
Einrichtung zum Verteilen und Orientieren von Luft, insbesondere für Kraftfahrzeuge
Device for distributing and directing air, particularly for motor vehicles

(30) Priorité: 10.10.2000 FR 0012937
(43) Date de publication de la demande: 17.04.2002
(73) Titulaire: Renault s.a.s., 92100 Boulogne Billancourt (FR)
(72) Inventeur: Puyravaud, Christophe, 78330 Fontenay-le-Fleury (FR); Roussel, Roland, 93700 Drancy (FR)

(56) Documents cités:
- EP-A- 0 818 336
- FR-A- 2 752 047
- US-A- 5 080 140

## Description

La présente invention concerne un dispositif de distribution et d'orientation d'air notamment pour une automobile. Une canalisation intégrée dans une architecture d'automobile servant à diffuser l'air dans l'habitacle sous forme de jet d'air ou, mieux encore, sous forme de rideau d'air, rencontre de gros problèmes d'orientation du flux (vers les passagers ou vers les vitrages) dus à l'environnement des sorties dans l'habitacle (sorties éloignées des conduits et de formes indépendantes de la forme du conduit). Il est donc nécessaire de gérer les sorties le plus à l'intérieur du conduit et non à la sortie comme sur les aérateurs des planches de bord.

On connaît par le document EP 0 818 336 une conduite d'air pour aérateur, réalisée sous forme d'un tambour dans lequel deux volets cylindriques peuvent se déplacer à la périphérie intérieure du tambour pour venir occulter une ou plusieurs sorties d'air prévues sur des génératrices du tambour. Cette conduite cylindrique s'intègre assez facilement dans une planche de bord, mais est en revanche trop importante pour pouvoir servir à la création de rideaux d'air autour de l'habitacle où il convient de réaliser des canalisations longues mais extrêmement étroites (par exemple 10 mm au maximum) afin de permettre leur intégration, ces canalisations devant être pourvues d'un mécanisme permettant l'orientation du flux d'air.

Le but de l'invention est de proposer une canalisation d'air et son mécanisme qui puisse servir à la réalisation de rideaux d'air.

L'invention atteint son but grâce à un dispositif de distribution et d'orientation d'air du type comprenant une canalisation allongée comprenant dans une zone de sa surface intérieure au moins deux ouvertures longitudinales de sortie d'air, et un volet latéralement mobile d'occultation des ouvertures, caractérisé en ce que le volet, avantageusement unique, est plaqué contre la surface intérieure par un ressort, et en ce qu'un mécanisme d'équilibrage et de parallélisme du volet est prévu pour conserver au volet son orientation longitudinale pendant son mouvement latéral d'occultation.

Avantageusement, ledit mécanisme comprend au moins deux crémaillères portées par le volet et un axe comprenant au moins deux roues dentées engrenant avec lesdites crémaillères.

Avantageusement, l'axe est maintenu par ledit ressort plaquant le volet contre la surface intérieure.

Avantageusement, ledit ressort est constitué par des lames de ressorts fixées sur la surface intérieure de la canalisation.

Avantageusement, ladite zone de surface intérieure où sont formées les ouvertures longitudinales de sortie d'air est sensiblement plane et le volet est sensiblement plan. Une légère courbure de la surface et du volet est cependant sans conséquences. La zone forme de préférence le fond de la canalisation pour constituer des rideaux d'air tombants.

Avantageusement, le volet peut occulter l'une ou l'autre de deux ouvertures longitudinales ou les deux à la fois, et donc réaliser aussi bien l'orientation que la fermeture et l'ouverture du flux.

Avantageusement, le mouvement latéral du volet est transmis par un organe extérieur à la canalisation, de manière à ne pas obstruer le flux d'air dans la canalisation.

Avantageusement, ledit organe est une roue dentée attaquant une crémaillère située sur la face intérieure du volet (celle qui est plaquée contre la surface de la canalisation), la roue dentée étant mue manuellement ou par un moteur électrique.

L'invention sera mieux comprise et d'autres caractéristiques et avantages de l'invention seront mis en évidence à l'aide de la description qui suit, en référence aux dessins schématiques annexés représentant un mode de réalisation de canalisation conforme à l'invention.
La figure 1 montre en perspective avec arrachement partiel un exemple de canalisation conforme à l'invention,
La figure 2 montre en coupe transversale la canalisation de la figure 1.

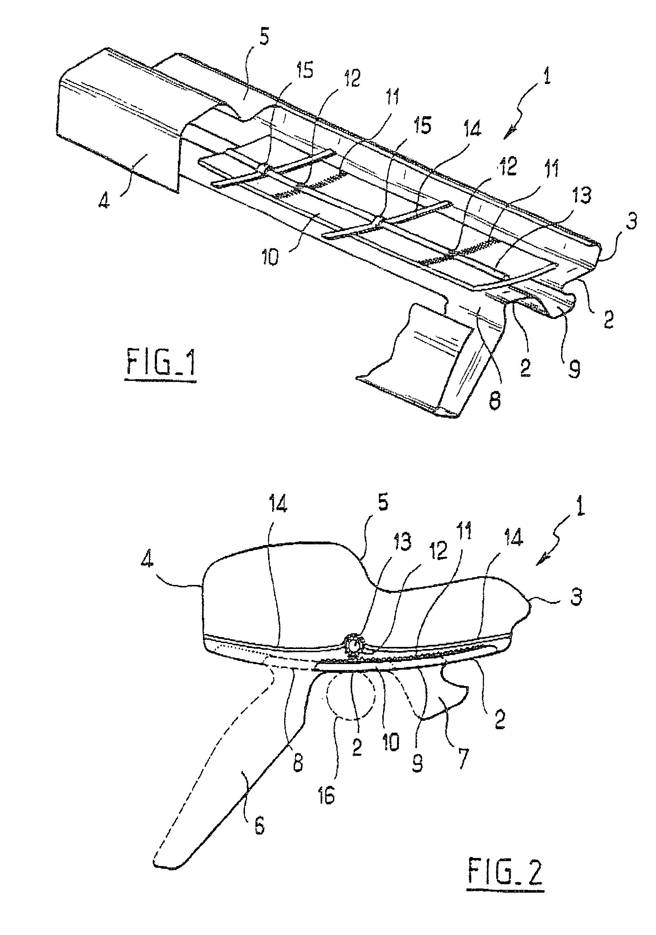

La canalisation allongée 1 comporte un fond 2, des côtés 3, 4 et une partie supérieure 5 de forme quelconque. Le fond 2 est sensiblement plat et est interrompu par les ouvertures longitudinales 8 et 9 de deux sorties d'air 6 et 7 (de forme quelconque) destinées à engendrer des rideaux d'air d'orientation différente. Un volet plat allongé 10 est posé sur le fond 2 et sa largeur est telle qu'il peut, selon sa position d'un côté à l'autre du fond 2, occulter seulement l'ouverture 9 (position en traits pleins de la figure 2), occulter à la fois les deux ouvertures 8 et 9 (position en tirets de la figure 2) ou occulter seulement l'ouverture 8 (position en pointillés de la figure 2).

Un mécanisme de parallélisme latéral et d'équilibrage du volet 10 comprend des crémaillères transversales 11 engrenant avec des roues dentées 12 portées par un axe longitudinal 13 disposé au-dessus du volet et maintenu en appui contre les crémaillères par des lames de ressort 14 fixées sur les côtés 3 et 4 de la canalisation. Ces lames de ressorts forment en leur milieu une boucle 15 autour de l'axe 13. La force des lames de ressort 14 est adaptée pour autoriser le glissement du volet 10 sur le fond 2 tout en réalisant l'étanchéité à l'air entre le volet et le fond.

L'entraînement du volet peut être réalisé électriquement par un moteur non représenté et une roue dentée 16 pénétrant dans le fond 2 et attaquant une crémaillère non représentée disposée à la face inférieure du volet 10 ; l'axe 13 sert à équilibrer le mouvement latéral du volet et l'empêcher de se mettre en travers. L'entraînement du volet pourrait aussi être manuel.

## Revendications

1. Dispositif de distribution et d'orientation d'air du type comprenant une canalisation allongée (1) comprenant dans une zone (2) de sa surface intérieure au moins deux ouvertures longitudinales (8, 9) de sortie d'air, et un volet (10) latéralement mobile d'occultation des ouvertures, **caractérisé en ce que** le volet (10) est plaqué contre la surface intérieure par un ressort (14), et **en ce qu'**un mécanisme (11, 12, 13) d'équilibrage et de parallélisme du volet (10) est prévu pour conserver au volet son orientation longitudinale pendant son mouvement latéral d'occultation.

2. Dispositif selon la revendication 1, **caractérisé en ce que** ledit mécanisme (11, 12, 13) comprend au moins deux crémaillères (11) portées par le volet (10) et un axe (13) comprenant au moins deux roues dentées (12) engrenant avec lesdites crémaillères (11).

3. Dispositif selon la revendication 2, **caractérisé en ce que** l'axe (13) est maintenu par ledit ressort (14) plaquant le volet (10) contre la surface intérieure.

4. Dispositif selon l'une quelconque des revendications 1 à 3, **caractérisé en ce que** ledit ressort (14) est constitué par des lames de ressorts fixées sur la surface intérieure de la canalisation (1).

5. Dispositif selon l'une quelconque des revendications 1 à 4, **caractérisé en ce que** ladite zone (2) de surface intérieure est sensiblement plane et le volet est sensiblement plan.

6. Dispositif selon l'une quelconque des revendications 1 à 5, **caractérisé en ce que** le volet (10) peut occulter l'une ou l'autre de deux ouvertures longitudinales (8, 9) ou les deux à la fois.

7. Dispositif selon l'une quelconque des revendications 1 à 6, **caractérisé en ce que** le mouvement latéral du volet (10) est transmis par un organe extérieur (16) à la canalisation.

8. Dispositif selon la revendication 7, **caractérisé en ce que** ledit organe est une roue dentée (16) attaquant une crémaillère située sur la face intérieure du volet (10).

9. Dispositif selon l'une quelconque des revendications 1 à 8, **caractérisé en ce que** le volet (10) est unique.

## Patentansprüche

1. Vorrichtung zur Verteilung und Ausrichtung von Luft, mit einer langgestreckten Leitung (1), die in einem Bereich (2) auf ihrer Innenseite wenigstens zwei langgestreckte Öffnungen (8, 9) für den Luftauslass aufweist, sowie eine seitlich bewegliche Klappe (10) zum Verschließen der Öffnungen, **dadurch gekennzeichnet, dass** die Klappe (10) durch eine Feder (14) an die Innenseite angedrückt wird und dass ein Mechanismus für den Ausgleich und die Aufrechterhaltung der Parallelität der Klappe (10) vorgesehen ist, um die Längsausrichtung der Klappe während ihrer seitlichen Bewegung in Richtung Verschlussstellung beizubehalten.

2. Vorrichtung nach Anspruch 1, **dadurch gekennzeichnet, dass** der Mechanismus (11, 12, 13) mindestens zwei Zahnstangen (11) aufweist, die von der Klappe (10) getragen werden und eine Achse (13), die zumindest zwei Zahnräder (12) trägt, welche mit den Zahnstangen (11) kämmen.

3. Vorrichtung nach Anspruch 2, **dadurch gekennzeichnet, dass** die Achse (13) von der Feder (14) getragen wird und die Klappe (10) an die Innenseite andrückt.

4. Vorrichtung nach einem der Ansprüche 1 bis 3, **dadurch gekennzeichnet, dass** das die Feder (14) aus Blattfedern besteht, die auf der Innenseite der Leitung (1) befestigt sind.

5. Vorrichtung nach einem der Ansprüche 1 bis 4, **dadurch gekennzeichnet, dass** der Bereich (2) der Innenseite und die Klappe im wesentlichen eben sind.

6. Vorrichtung nach einem der Ansprüche 1 bis 5, **dadurch gekennzeichnet, dass** die Klappe (10) eine der beiden Öffnungen (8, 9) oder beide gleichzeitig verschließen kann.

7. Vorrichtung nach einem der Ansprüche 1 bis 6, **dadurch gekennzeichnet, dass** die seitliche Bewegung der Klappe (10) durch ein außerhalb der Leitung angeordnetes Bauteil (16) bewirkt wird.

8. Vorrichtung nach Anspruch 7, **dadurch gekennzeichnet, dass** das Bauteil ein Zahnrad (16) ist, das in eine Zahnstange auf der Innenseite der Klappe (10) eingreift.

9. Vorrichtung nach einem der Ansprüche 1 bis 8, **dadurch gekennzeichnet, dass** die Klappe (10) einstückig ist.

## Claims

1. A device for distributing and orienting air of the type comprising an elongate channel (1) comprising, in a zone (2) of its inner surface, at least two longitudinal air outlet openings (8, 9) and a shutter (10) moving laterally to close the openings, **characterised in that** the shutter (10) is forced against the inner surface by a spring (10) and **in that** a mechanism (11, 12, 13) ensuring that the shutter (10) is balanced and parallel is provided in order to ensure that the shutter retains its longitudinal orientation during its lateral closing movement.

2. A device as claimed in claim 1, **characterised in that** the mechanism (11, 12, 13) comprises at least two racks (1) borne by the shutter (10) and a spindle (13) comprising at least two toothed wheels (12) engaging with the racks (11).

3. A device as claimed in claim 2, **characterised in that** the spindle (13) is held by the spring (14) forcing the shutter (10) against the inner surface.

4. A device as claimed in any one of claims 1 to 3, **characterised in that** the spring (14) is formed by spring blades secured to the inner surface of the channel (1).

5. A device as claimed in any one of claims 1 to 4, **characterised in that** the inner surface zone (2) is substantially plane and the shutter is substantially plane.

6. A device as claimed in any one of claims 1 to 5, **characterised in that** the shutter (10) may close one or other of the two longitudinal openings (8, 9) or both at once.

7. A device as claimed in any one of claims 1 to 6, **characterised in that** the lateral movement of the shutter (10) is transmitted by an organ (16) outside the channel.

8. A device as claimed in claim 7, **characterised in that** the organ is a toothed wheel (16) engaging a rack disposed on the inner surface of the shutter (10).

9. A device as claimed in any one of claims 1 to 8, **characterised in that** there is a single shutter (10).
